# EUROPEAN PATENT APPLICATION

(11) **EP 4 752 562 A1**
(43) Date of publication of application: **03.06.2026**
(21) Application number: 25215818.3
(22) Date of filing: 14.11.2025
(51) Int. Cl.: G01P 15/08, G01P 15/18

(54) **SYSTEM, DEVICE, AND METHOD FOR OUTPUTTING DATA FROM TWO ACCELEROMETERS WITH DIFFERENT OPERATING RANGES**

(30) Priority: 29.11.2024 US 202418963986
(71) Applicant: STMicroelectronics International N.V., 1228 Plan-les-Ouates, Geneva (CH)
(72) Inventor: RIZZARDINI, Federico, 20864 Agrate Brianza (MB) (IT)
(74) Representative: Studio Torta S.p.A.

(57) **Abstract**

In accordance with various embodiments of the present disclosure, a method for outputting data from an inertial measurement unit having a first accelerometer having a first operating range and a second accelerometer having a second operating range comprises comparing an absolute value of data from the first accelerometer and/or from the second accelerometer for each of three axes to a first threshold and a second threshold; if the absolute value of the data from the first accelerometer and/or from the second accelerometer is less than the first threshold for all of the three axes, writing the data from the first accelerometer to a data buffer; and if the absolute value of the data from the first accelerometer and/or from the second accelerometer is greater than the second threshold for any of the three axes, writing the data from the second accelerometer to the data buffer.

## Description

### FIELD OF THE INVENTION

Example embodiments of the present disclosure relate generally to accelerometers and, more particularly, devices that use both a low-g and a high-g accelerometer.

### BACKGROUND

Many mobile devices, such as mobile phones and smart watches, have a built-in accelerometer. For example, in smart watches such accelerometers are often used for velocity and high-intensity motion analysis in sports medicine (e.g., handball, baseball, tennis, and golf), fall detection, physiological tracking, and wrist movement analysis in gaming and virtual reality control. Some accelerometers (termed "low-g") are able to detect acceleration across a low range - typically across a range of about +/-16 g - but have a high resolution. Some accelerometers (termed "high-g") are able to detect acceleration across a wider range - typically across a range of about +/- 256 g - but have a relatively poor resolution.

To provide acceleration detection across a wide range, it may be desirable to use both a low-g and a high-g accelerometer. However, providing the data from either a low-g or a high-g accelerometer without the necessity to gather and process both of them for an application processor is difficult due to challenges with controlling the two types of devices and selecting the optimal data to be used at the application level. This is especially true if a hardware-only solution is desired. Also, it may be undesirable to keep both accelerometers powered on at all times as that would cause unnecessarily high power consumption.

Applicant has identified many technical challenges and difficulties associated with using two accelerometers with different operating ranges in a device. Through applied effort, ingenuity, and innovation, Applicant has solved problems related to using two accelerometers with different operating ranges in a device by developing solutions embodied in the present disclosure, which are described in detail below.

### BRIEF SUMMARY

The present invention is set out in the annexed claims. Various embodiments described herein relate to systems, devices, and methods for outputting data from an inertial measurement unit (IMU) having a first accelerometer with a first operating range and a second accelerometer with a second operating range greater than the first operating range.

In accordance with various embodiments of the present disclosure, method for outputting data from an inertial measurement unit having a first accelerometer having a first operating range and a second accelerometer having a second operating range greater than the first operating range is provided. In some embodiments, the method comprises monitoring data from the first accelerometer and/or data from the second accelerometer for each of three axes; comparing an absolute value of the data from the first accelerometer and/or an absolute value of the data from the second accelerometer for each of three axes to a first threshold and a second threshold; if the absolute value of the data from the first accelerometer and/or the absolute value of the data from the second accelerometer is less than the first threshold for all of the three axes, writing the data from the first accelerometer to a data buffer; and if the absolute value of the data from the first accelerometer and/or the absolute value of the data from the second accelerometer is greater than the second threshold for any of the three axes, writing the data from the second accelerometer to the data buffer.

In some embodiments, the first threshold and the second threshold are predetermined.

In some embodiments, the first predetermined threshold and the second predetermined threshold are equal.

In some embodiments, the first predetermined threshold and the second predetermined threshold are less than an upper operating limit of the first accelerometer.

In some embodiments, writing the data from the first accelerometer to the data buffer includes writing a tag to indicate that the data came from the first accelerometer, and writing the data from the second accelerometer to the data buffer includes writing a tag to indicate that the data came from the second accelerometer.

In some embodiments, the data from the first accelerometer are written to the data buffer as a seven-byte word, with two bytes for x-axis data, two bytes for y-axis data, two bytes for z-axis data, and one byte for the tag to indicate that the data came from the first accelerometer, and the data from the second accelerometer are written to the data buffer as a seven-byte word, with two bytes for x-axis data, two bytes for y-axis data, two bytes for z-axis data, and one byte for the tag to indicate that the data came from the second accelerometer.

In some embodiments, monitoring data from the first accelerometer and/or data from the second accelerometer for each of three axes comprises monitoring data only from the first accelerometer.

In some embodiments, monitoring data from the first accelerometer and/or data from the second accelerometer for each of three axes comprises (i) monitoring data from the first accelerometer if the absolute value of the data from the first accelerometer and/or the absolute value of the data from the second accelerometer is less than the first predetermined threshold for all of the three axes, and (ii) monitoring data from the second accelerometer if the absolute value of the data from the first accelerometer and/or the absolute value of the data from the second accelerometer is greater than the second predetermined threshold for any of the three axes.

In some embodiments, if the absolute value of the data from the first accelerometer and/or the absolute value of the data from the second accelerometer is less than the first predetermined threshold for all of the three axes, the method further comprises turning on the first accelerometer if the first accelerometer is not already on and turning off the second accelerometer; if the absolute value of the data from the first accelerometer and/or the absolute value of the data from the second accelerometer is greater than the second predetermined threshold for any of the three axes, the method further comprises turning on the second accelerometer if the second accelerometer is not already on and turning off the first accelerometer.

In some embodiments, if the absolute value of the data from the first accelerometer and/or the absolute value of the data from the second accelerometer is less than the first predetermined threshold for all of the three axes, the method further comprises determining if a predetermined amount of time has lapsed during which the absolute value of the data from the first accelerometer and/or the absolute value of the data from the second accelerometer is less than the first predetermined threshold for all of the three axes before writing the data from the first accelerometer to a data buffer, and if the absolute value of the data from the first accelerometer and/or the absolute value of the data from the second accelerometer is greater than the second predetermined threshold for any of the three axes, the method further comprises determining if the predetermined amount of time has lapsed during which the absolute value of the data from the first accelerometer and/or the absolute value of the data from the second accelerometer is greater than the second predetermined threshold for any of the three axes before writing the data from the second accelerometer to the data buffer.

In some embodiments, the data buffer comprises a first-in, first-out data buffer.

In accordance with various embodiments of the present disclosure, a device for outputting data from an inertial measurement unit having two accelerometers with different operating ranges is provided. In some embodiments, the device comprises a first accelerometer having a first operating range; a second accelerometer having a second operating range greater than the first operating range; a data buffer; and a finite state machine. The finite state machine is configured to: monitor data from the first accelerometer and/or data from the second accelerometer for each of three axes; compare an absolute value of the data from the first accelerometer and/or an absolute value of the data from the second accelerometer for each of three axes to a first predetermined threshold and a second predetermined threshold; if the absolute value of the data from the first accelerometer and/or the absolute value of the data from the second accelerometer is less than the first predetermined threshold for all of the three axes, write the data from the first accelerometer to a data buffer; and if the absolute value of the data from the first accelerometer and/or the absolute value of the data from the second accelerometer is greater than the second predetermined threshold for any of the three axes, write the data from the second accelerometer to the data buffer.

In accordance with various embodiments of the present disclosure, a system for outputting data from an inertial measurement unit having two accelerometers with different operating ranges is provided. In some embodiments, the system comprises an inertial measurement unit (IMU) as described above and a microcontroller operatively connected to but physically separated from the IMU. The microcontroller is configured to read, from the data buffer, the data written from the first accelerometer and/or the data written from the second accelerometer.

### BRIEF DESCRIPTION OF THE DRAWINGS

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:
FIG. 1 is a block diagram of an example device for outputting data from an inertial measurement unit having two accelerometers with different operating ranges, in accordance with some embodiments of the present disclosure;
FIG. 2 illustrates an example data word such as may be written by an example device for outputting data from an inertial measurement unit having two accelerometers with different operating ranges, in accordance with some embodiments of the present disclosure; and
FIGS. 3 and 4 are functional block diagrams of an example device for outputting data from an inertial measurement unit having two accelerometers with different operating ranges, in accordance with two different embodiments of the present disclosure.

### DETAILED DESCRIPTION OF THE INVENTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

As used herein, terms such as "front," "rear," "top," etc. are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," and the like generally mean that the particular feature, structure, or characteristic following the phrase may be included in at least one embodiment of the present disclosure, and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

Various embodiments of the present disclosure overcome the above technical challenges and difficulties and provide various technical improvements and advantages based on, for example, but not limited to, providing example devices and methods for outputting data from an IMU having two accelerometers with different operating ranges. Various embodiments of the present disclosure may be implemented in any suitable device having two such accelerometers, including but not limited to mobile phones or smart watches. As described herein, the two accelerometers will be termed a low-g accelerometer and a high-g accelerometer. The terms are relative and refer to accelerometers with different operating ranges (one greater than the other). As described herein, the data from the low-g accelerometer will be termed low-g data and the data from the high-g accelerometer will be termed high-g data. In various embodiments, the low-g accelerometer and the high-g accelerometer are part of an IMU.

Embodiments of the present disclosure are directed to fusing the output from a low-g accelerometer and a high-g accelerometer and providing a single accelerometer data channel that can be read by the host device without requiring further data manipulation by a host device.

Embodiments of the present disclosure are directed to a hardware only solution in which a finite state machine monitors the output of both a low-g accelerometer and a high-g accelerometer, compares the accelerometer data to a threshold to determine whether to write the low-g accelerometer data or the high-g accelerometer data to an output buffer which can be read by a host device, and writes the accelerometer data from either the low-g accelerometer or the high-g accelerometer to the output buffer along with a tag indicating from which accelerometer the data came.

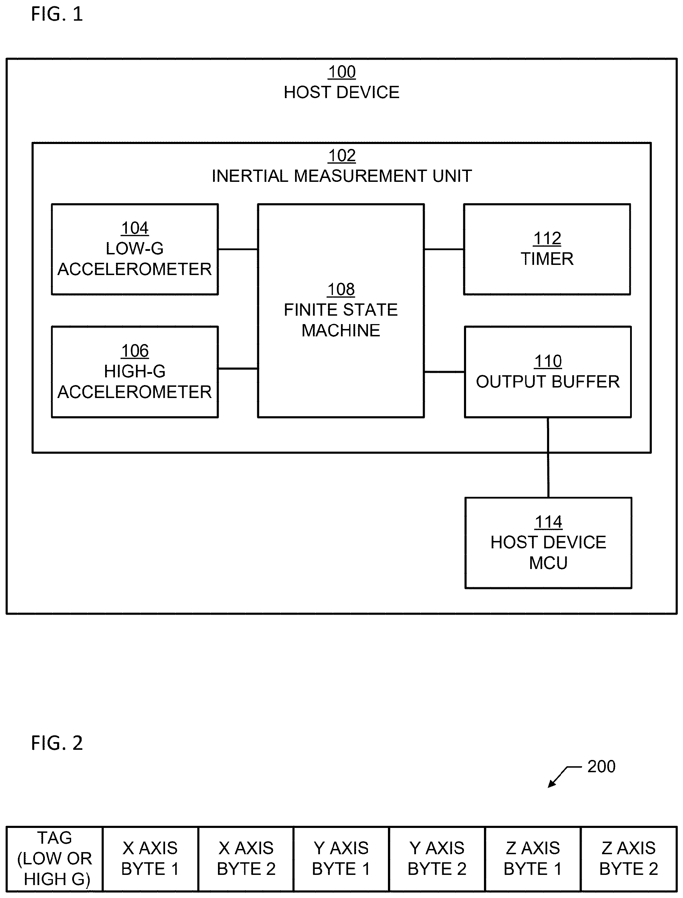

FIG. 1 is a block diagram of an example device for outputting data from an inertial measurement unit having two accelerometers with different operating ranges, in accordance with some embodiments of the present disclosure. FIG. 1 illustrates an example device 100, such as a mobile phone or smart watch, comprising an IMU 102. In various embodiments, the IMU 102 comprises a low-g accelerometer 104, a high-g accelerometer 106, a finite state machine (FSM) 108, an output buffer 110 (e.g., a first-in, first-out (FIFO) buffer), and a timer 112. In various embodiments, the FSM 108 does not require its own microcontroller (MCU) and is not part of any MCU controlling the device itself. An FSM is a computational model that can be (and is in various embodiments of the disclosure) implemented using sequential logic circuits. Generally, an FSM is faster and uses less power than, for example, providing such functionality in an MCU.

In various embodiments, the accelerometers output data for each of three axes (x, y, z). The output registers can be read directly by the host device to obtain a single channel of accelerometer data which combines data from the low-g accelerometer and the high-g accelerometer, depending on whether the device is experiencing low acceleration (i.e., below a predefined threshold) or high acceleration (i.e., above a predefined threshold).

In various embodiments, the FSM 108 monitors the outputs of the accelerometers 104, 106. In various embodiments, if the absolute value for any one of the three axes (x, y, or z) is greater than a threshold (e.g., 15 g), then the output of the high-g accelerometer 106 is written to the output buffer 110. Conversely, if the absolute value for all the three axes (x, y, and z) is less than a threshold (e.g., 15 g), then the output of the low-g accelerometer 104 is written to the output buffer 110. Generally, in various embodiments the threshold should be set somewhat lower than the absolute value of the operational limit of the low-g accelerometer. In one example, the operating range of the low-g accelerometer is +/- 16 g and the threshold is set to 15 g. In various embodiments, the threshold is the same for each of these comparisons, or two different thresholds are used.

In various embodiments, the data from the low-g accelerometer 104 or from the high-g accelerometer 106 (as determined above) is repeatedly written to the output buffer 110 in seven-byte words. FIG. 2 illustrates an example of such a seven-byte word 200. As illustrated in FIG. 2, six of the bytes contain the accelerometer data, specifically, two bytes for each of the x-axis data, the y-axis data, and the z-axis data. The seventh byte is a tag that contains data to indicate whether the data in the other six bytes is low-g accelerometer data or high-g accelerometer data. This allows the host device to know where the data came from and adjust the sensitivity of the data accordingly. Any suitable bit configuration in the seventh byte can be used to indicate the source of the data, as long as the host device is programmed accordingly. This sensitivity adjustment is necessary because the low-g accelerometer data and high-g accelerometer data have different sensitivities. The low-g accelerometer data has a range of, for example, -16 g to +16 g written in 16 bits, while the high-g accelerometer data has a range of, for example, -256 g to +256 g written in 16 bits. Thus, the low-g accelerometer data has a higher sensitivity. In various embodiments, a microcontroller 114 of the host device just needs to read the data from the output buffer 110 and apply the correct sensitivity to the accelerometer data based on the tag. The host device can then use the accelerometer data for any suitable application.

In one example embodiment, the logic in the FSM is implemented at 480 Hz, thus either the low-g accelerometer data or high-g accelerometer data is written to the output buffer 480 times per second. In various embodiments, the output buffer is a first-in, first-out (FIFO) buffer which can operate in several modes, including a continuous mode.

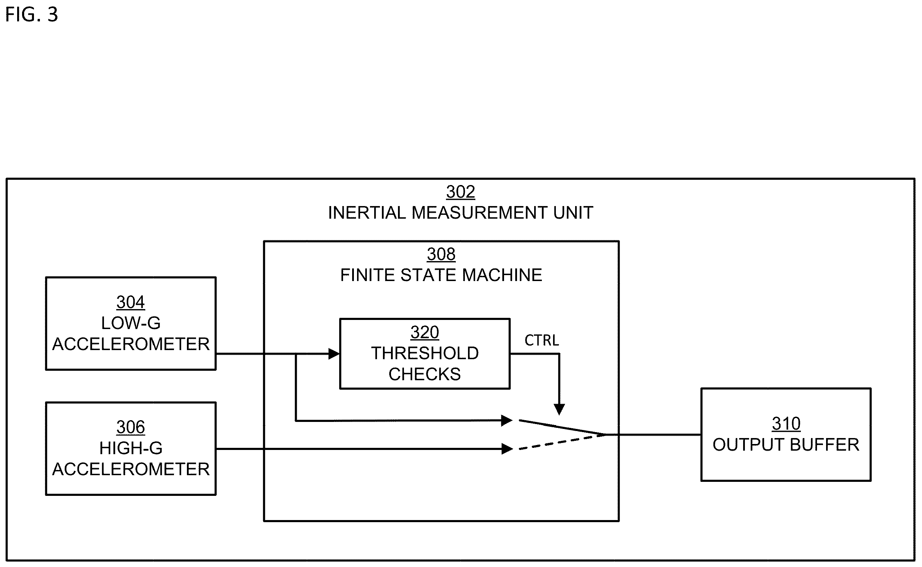

In some embodiments, the FSM monitors the output of only the low-g accelerometer and determines whether to write the low-g accelerometer data or the high-g accelerometer data to the output buffer based only on comparing the low-g accelerometer data to the threshold(s). Such an embodiment is illustrated in the example functional block diagram of FIG. 3. As seen in FIG. 3, an IMU 302 comprises a low-g accelerometer 304, a high-g accelerometer 306, an FSM 308, and an output buffer 310. The FSM 308 comprises a threshold check functional block 320. In the illustrated embodiment, only the low-g accelerometer data is input to the threshold check block 320. The threshold check block 320 compares the low-g accelerometer data to the threshold(s) and uses that comparison to determine which data to write to the output buffer 310. In the embodiment of FIG. 3, the low-g accelerometer 304 must remain on at all times, but the high-g accelerometer 306 is optionally turned off when not needed and turned on when needed. However, this optional embodiment may not be desirable due to the settling time required when an accelerometer is turned on.

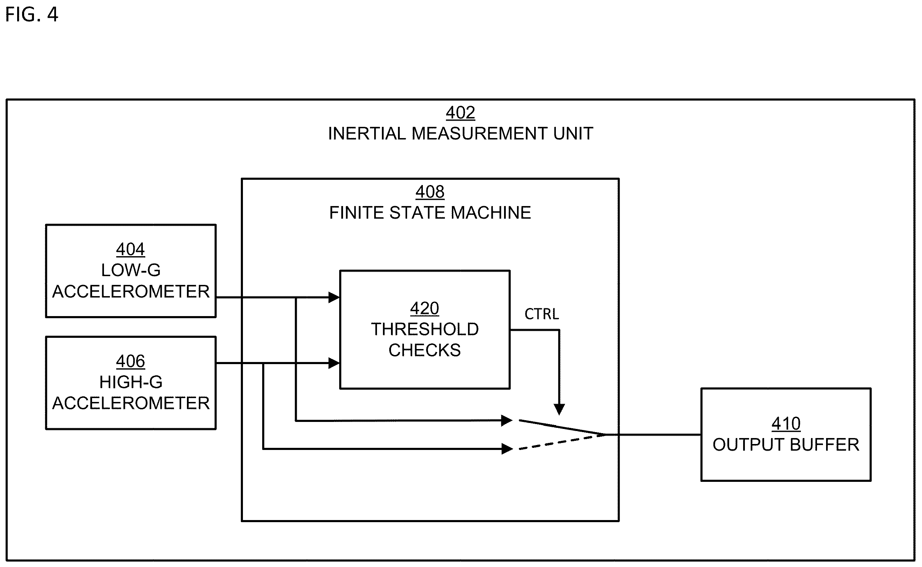

In other embodiments, the FSM monitors the output of both the low-g accelerometer and the high-g accelerometer and determines whether to write the low-g accelerometer data or the high-g accelerometer data to the output buffer based on comparing one or the other to the threshold(s). Such an embodiment is illustrated in the example functional block diagram of FIG. 4. As seen in FIG. 4, an IMU 402 comprises a low-g accelerometer 404, a high-g accelerometer 406, an FSM 408, and an output buffer 410. The FSM 408 comprises a threshold check functional block 420. In the illustrated embodiment, the data from both the low-g accelerometer 404 and the high-g accelerometer 406 is input to the threshold check block 420. The threshold check block 420 compares the low-g accelerometer data and/or the high-g accelerometer data to the threshold(s) and uses that comparison to determine which data to write to the output buffer 410. For example, if the absolute value of the data from both accelerometers is less than the predetermined threshold for all of the three axes, then the data from the low-g accelerometer 404 is written to the output buffer 410. Conversely, if the absolute value of the data from both accelerometers is greater than the predetermined threshold for any of the three axes, then the data from the high-g accelerometer 406 is written to the output buffer 410.

In the embodiment of FIG. 4, the accelerometer that is not being used is optionally turned off. In this regard, the threshold check block 420 compares the data from the accelerometer that is on to the predetermined threshold to not only determine which data should be written to the output buffer but also to determine which accelerometer to turn on (if not already on) and which accelerometer to turn off. However, this optional embodiment may not be desirable due to the settling time required when an accelerometer is turned on.

In some embodiments, such as illustrated in FIG. 1, the IMU comprises a timer 112. In such an embodiment, if the absolute value of the accelerometer data crosses the predetermined threshold (i.e., goes from below the threshold to above the threshold or from above the threshold to below the threshold), the FSM 108 checks the abovementioned condition for a predetermined amount of time (as would be tracked by the timer 112) before changing which data is written to the output buffer 110. For example, if the absolute value of the accelerometer data goes from below the threshold to above the threshold for any of the three axis, the FSM checks the abovementioned condition for a predetermined amount of time to confirm that the absolute value of the accelerometer data stays above the threshold for any of the three axis before changing from writing the low-g accelerometer data to the output buffer to writing the high-g accelerometer data to the output buffer. Conversely, if the absolute value of the accelerometer data goes from above the threshold to below the threshold for all of the three axes, the FSM checks the abovementioned condition for a predetermined amount of time to confirm that the absolute value of the accelerometer data stays below the threshold for all of the three axes before changing from writing the high-g accelerometer data to the output buffer to writing the low-g accelerometer data to the output buffer. In such an embodiment, fleeting changes in the accelerometer data do not result in changes to the accelerometer from which the data is used. In some embodiments, the predetermined amount of time can be monitored using a timer or by counting the number of samples at a known output data rate.

In various embodiments, the IMU has an automatic self-configure feature which enables self-triggered configuration changes, such as changing the power mode, full scale, output data rate, enabling and disabling of embedded features, changing the FIFO mode, etc.

### Conclusion

Many modifications and other embodiments of the disclosures set forth herein will come to mind to one skilled in the art to which these disclosures pertain having the benefit of teachings presented in the foregoing descriptions and the associated drawings. Although the figures only show certain components of the apparatus and systems described herein, it is understood that various other components may be used in conjunction with the system. Therefore, it is to be understood that the disclosures are not to be limited to the specific embodiments disclosed and that modifications and other embodiments are intended to be included within the scope of the appended claims. Moreover, the steps in the method described above may not necessarily occur in the order depicted in the accompanying diagrams, and in some cases one or more of the steps depicted may occur substantially simultaneously, or additional steps may be involved. Although specific terms are employed herein, they are used in a generic and descriptive sense only and not for purposes of limitation.

While various embodiments in accordance with the principles disclosed herein have been shown and described above, modifications thereof may be made by one skilled in the art without departing from the spirit and the teachings of the disclosure. The embodiments described herein are representative only and are not intended to be limiting. Many variations, combinations, and modifications are possible and are within the scope of the disclosure. Alternative embodiments that result from combining, integrating, and/or omitting features of the embodiment(s) are also within the scope of the disclosure. Accordingly, the scope of protection is not limited by the description set out above.

While this detailed description has set forth some embodiments of the present disclosure, the appended claims cover other embodiments of the present disclosure which differ from the described embodiments according to various modifications and improvements. For example, the appended claims can cover any form of device which uses two accelerometers having two different operating ranges, including but not limited to mobile phones, smart watches, smart bands, laptops (example applications include but are not limited to vehicle accident detection, warranty solutions, impact analysis), sports equipment (e.g., boxing glove, golf club, tennis racket, baseball bat, football helmet, ball) (example applications include but are not limited to impact analysis and sport dynamics analysis), gaming or virtual reality controllers, industrial equipment (example applications include but are not limited to vibration monitoring), helmets (example applications include but are not limited to impact analysis for safety), and asset tracking devices.

## Claims

1. A method for outputting data from an inertial measurement unit, IMU, having a first accelerometer (104; 304; 404) having a first operating range and a second accelerometer (106; 306; 406) having a second operating range greater than the first operating range, the method comprising the steps of:
monitoring data from the first accelerometer and/or data from the second accelerometer for each of three axes;
comparing an absolute value of the data from the first accelerometer and/or an absolute value of the data from the second accelerometer for each of three axes to a first threshold and a second threshold;
based on a result of said comparing step, writing the data from the first or the second accelerometer to a data buffer.

2. The method of claim 1, wherein:
if the absolute value of the data from the first accelerometer and/or the absolute value of the data from the second accelerometer is less than the first threshold for all of the three axes, writing the data from the first accelerometer to a data buffer.

3. The method of claim 1 or claim 2, wherein:
if the absolute value of the data from the first accelerometer and/or the absolute value of the data from the second accelerometer is greater than the second threshold for any of the three axes, writing the data from the second accelerometer to the data buffer.

4. The method of claim 1, wherein the first threshold and the second threshold are predetermined., in particular wherein the first predetermined threshold and the second predetermined threshold are equal.

5. The method of claim 4, wherein the first predetermined threshold and the second predetermined threshold are less than an upper operating limit of the first accelerometer.

6. The method of anyone of claims 1-5, wherein writing the data from the first accelerometer to the data buffer includes writing a tag to indicate that the data came from the first accelerometer; and
wherein writing the data from the second accelerometer to the data buffer includes writing a tag to indicate that the data came from the second accelerometer.

7. The method of claim 6, wherein the data from the first accelerometer are written to the data buffer as a seven-byte word, with two bytes for x-axis data, two bytes for y-axis data, two bytes for z-axis data, and one byte for the tag to indicate that the data came from the first accelerometer; and
wherein the data from the second accelerometer are written to the data buffer as a seven-byte word, with two bytes for x-axis data, two bytes for y-axis data, two bytes for z-axis data, and one byte for the tag to indicate that the data came from the second accelerometer.

8. The method of anyone of claims 1-7, wherein monitoring data from the first accelerometer and/or data from the second accelerometer for each of three axes comprises monitoring data only from the first accelerometer.

9. The method of claim 4, or of anyone of claims 5-8 when depending upon claim 4, wherein monitoring data from the first accelerometer and/or data from the second accelerometer for each of three axes comprises (i monitoring data from the first accelerometer if the absolute value of the data from the first accelerometer and/or the absolute value of the data from the second accelerometer is less than the first predetermined threshold for all of the three axes, and (ii monitoring data from the second accelerometer if the absolute value of the data from the first accelerometer and/or the absolute value of the data from the second accelerometer is greater than the second predetermined threshold for any of the three axes.

10. The method of claim 9, wherein if the absolute value of the data from the first accelerometer and/or the absolute value of the data from the second accelerometer is less than the first predetermined threshold for all of the three axes, the method further comprises turning on the first accelerometer if the first accelerometer is not already on and turning off the second accelerometer; and
wherein if the absolute value of the data from the first accelerometer and/or the absolute value of the data from the second accelerometer is greater than the second predetermined threshold for any of the three axes, the method further comprises turning on the second accelerometer if the second accelerometer is not already on and turning off the first accelerometer.

11. The method of claim 4, or of anyone of claims 5-10 when depending upon claim 4, wherein, if the absolute value of the data from the first accelerometer and/or the absolute value of the data from the second accelerometer is less than the first predetermined threshold for all of the three axes, the method further comprises determining if a predetermined amount of time has lapsed during which the absolute value of the data from the first accelerometer and/or the absolute value of the data from the second accelerometer is less than the first predetermined threshold for all of the three axes before writing the data from the first accelerometer to a data buffer; and
if the absolute value of the data from the first accelerometer and/or the absolute value of the data from the second accelerometer is greater than the second predetermined threshold for any of the three axes, the method further comprises determining if the predetermined amount of time has lapsed during which the absolute value of the data from the first accelerometer and/or the absolute value of the data from the second accelerometer is greater than the second predetermined threshold for any of the three axes before writing the data from the second accelerometer to the data buffer.

12. An inertial measurement unit, IMU, comprising:
a first accelerometer (104; 304; 404) having a first operating range;
a second accelerometer (106; 306; 406) having a second operating range greater than the first operating range;
a data buffer (110; 310; 410); and
a finite state machine (108; 308; 408) configured to:
monitor data from the first accelerometer and/or data from the second accelerometer for each of three axes;
compare an absolute value of the data from the first accelerometer and/or an absolute value of the data from the second accelerometer for each of three axes to a first threshold and a second threshold;
based on a result of said comparison, writing the data from the first or the second accelerometer to a data buffer.

13. The inertial measurement unit of claim 12, wherein the finite state machine (108; 308; 408) is further configured to:
if the absolute value of the data from the first accelerometer and/or the absolute value of the data from the second accelerometer is less than the first threshold for all of the three axes, write the data from the first accelerometer to a data buffer.

14. The inertial measurement unit of claim 12 or claim 13, wherein the finite state machine (108; 308; 408) is further configured to:
if the absolute value of the data from the first accelerometer and/or the absolute value of the data from the second accelerometer is greater than the second threshold for any of the three axes, write the data from the second accelerometer to the data buffer.

15. A system for outputting data from an inertial measurement unit having two accelerometers with different operating ranges, the system comprising:
i) an inertial measurement unit, IMU, according to anyone of claims 12-14;; and
ii) a microcontroller operatively connected to but physically separated from the IMU, the microcontroller configured to read, from the data buffer, the data written from the first accelerometer and/or the data written from the second accelerometer.
